# EUROPÄISCHE PATENTSCHRIFT

(11) **EP 0 850 365 B1**
(45) Veröffentlichungstag und Bekanntmachung des Hinweises auf die Patenterteilung: **11.08.1999**
(21) Anmeldenummer: 96931780.9
(22) Anmeldetag: 07.09.1996
(51) Int. Cl.: F16C 17/22, F16C 19/52

(54) **SEGMENTIERTES WÄRMEDEHNUNGSAUSGLEICHSELEMENT**
SEGMENTED ELEMENT TO COMPENSATE FOR THERMAL EXPANSION
ELEMENT SEGMENTE DE COMPENSATION DE LA DILATATION THERMIQUE

(30) Priorität: 14.09.1995 DE 19534003
(43) Veröffentlichungstag der Anmeldung: 01.07.1998
(73) Patentinhaber: ZF FRIEDRICHSHAFEN Aktiengesellschaft, 88038 Friedrichshafen (DE)
(72) Erfinder: LANZ, Hermann, D-88699 Frickingen (DE); FÜHRER, Gerhard, D-88048 Friedrichshafen (DE); MÜLLER, Walter, D-88046 Friedrichshafen (DE)
(86) Internationale Anmeldenummer: EP9603929
(87) Internationale Veröffentlichungsnummer: WO9710447

(56) Entgegenhaltungen:
- DE-A- 2 658 791
- DE-A- 3 239 305
- DE-A- 4 221 802
- US-A- 1 438 054
- US-A- 2 859 033

## Beschreibung

Die Erfindung bezieht sich auf ein Wärmedehnungsausgleichselement nach dem Oberbegriff von Anspruch 1. Solche Ausgleichselemente werden bei Maschinen benötigt, die aus Maschinenteilen aus unterschiedlichen Werkstoffen mit deutlich verschiedenen Wärmeausdehnungskoeffizienten zusammengesetzt sind, und diese Teile wegen ihrer Größe ein nicht zu vernachlässigenden Längenunterschied bei Temperaturänderungen ergeben. Eine solche Problematik tritt z.B. im Getriebebau auf, für den Fall, daß Getriebewellen und Gehäuse aus unterschiedlichem Material gefertigt sind, z.B. Wellen aus Stahl und Gehäuse aus Leichtmetallen wie Aluminium oder Magnesium, und damit bei langen Getriebewellen ein temperaturabhängiges Lagerspiel entsteht.

Diese Längenunterschiede durch Wärmedehnung lassen sich auf verschiedene Weise kompensieren, z.B. durch Federlagerung der Wellen, durch einen Ausgleichsspalt, der von einem keilförmigen Wärmeausdehnungsstift eingestellt wird, und Ausgleichselemente, die ein Material mit hohem Wärmeausdehnungskoeffizienten beinhalten, so daß sie auch bei relativ geringer Baugröße große Stellängen aufweisen. Letztgenannte Ausgleichselemente sind schon bekannt, mögliche Ausführungen sind in DE-A-4 221 802, DE-A-2 658 791 und DE-A-3 239 305 dargestellt. In den beiden letztgenannten Druckschriften können die Dehnungselementen auch segmentartig unterteilt werden.

Ein Ausgleichselement gemäß der DE-A-4 221 802, die dem Oberbegriff von Anspruch 1 zugrundeliegt, besteht aus einem Hohlkörper, einem darinliegenden ringförmigen Dehnungselement aus Material mit hohem Wärmeausdehnungskoeffizienten, z. B. einem Kunststoff, und einem Kolben, der in dem Hohlkörper gleitet und die Wärmedehnung des Dehnungselement vermittelt. Dieses Material ist hinreichend plastisch, so daß es durch die Umfassung durch den Hohlkörper verformt und geführt werden kann. Die Wärmeausdehnung des Hohlkörpers ist im Vergleich zu der des Dehnungselements klein, so daß sich die Hohlkörperquerschnittsfläche in erster Ordnung nicht verändert, und die Volumenausdehnung sich voll auf die Längenausdehnung des Materials auswirkt, und damit die relative Längenausdehnung ca. das Dreifache der des ungeführten Materials ist. Dieser Faktor drei resultiert aus der Berechnung der relativen Volumenausdehnung aus der relativen Längenausdehnung eines freiliegenden Körpers für kleine Änderungen.

Probleme solcher Ausgleichselemente sind, daß bei ungleicher Belastung Material des Dehnungselements von den stärker belasteten Stellen zu den weniger stark belasteten Stellen fließt. Diese Umverteilung des Materials des Dehnungselements führt zu einem einseitigen Setzen, das wiederum bei der Anwendung des Getriebelagerspielausgleichs zu einem Verkippen der Wellenachsen führen kann. Dieser negative Effekt des Verkippens der Wellenachsen kann im ungünstigsten Fall gegenüber dem Effekt des Wärmedehnungsausgleichs überwiegen, so daß das Wärmedehnungsausgleichselement für Betrieb und Lebensdauer des Getriebes sogar einen schädlichen Einfluß mit sich bringen kann.

Die Aufgabe der Erfindung ist es, das Fließen des Materials des Dehnungselements von stärker belasteten Stellen zu weniger stark belasteten Stellen und damit das einseitige Setzen und die Verkippung der Wellenachsen zu verhindern. Diese Aufgabe wird erfindungsgemäß gelöst, indem das Dehnungselement in mehrere Segmente unterteilt ist und der Hohlkörper einen Kamm bildet, dessen Zacken den Hohlkörper in mehrere Kammern unterteilt, die die Segmente des Dehnungselementes aufnehmen.

In Zeichnungen sind drei Ausführungsbeispiele der Erfindung dargestellt.

Es zeigen:
- Fig. 1: einen Querschnitt durch ein Segment eines Wärmedehnungsausgleichselements 1;
- Fig. 2: einen Querschnitt durch ein unterteiltes ringförmiges Dehnungselement 2;
- Fig. 3a und 3b: einen Querschnitt entlang des Umfangs;

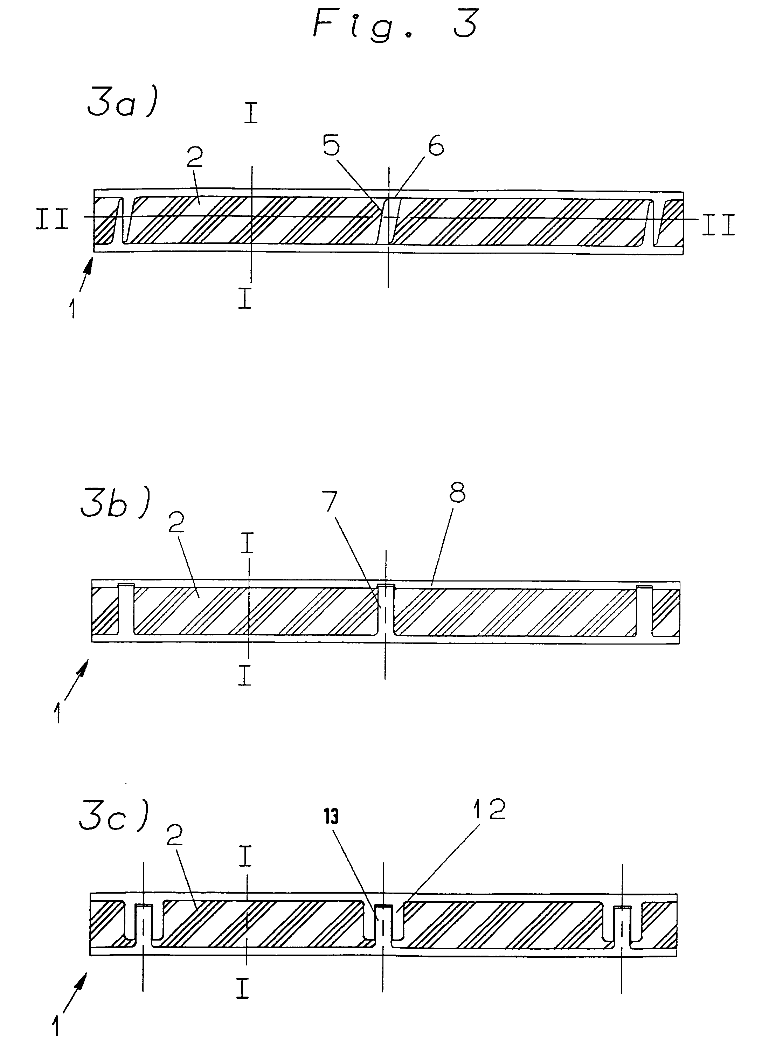

- Fig. 3a: zwei gegeneinander verschränkte, ringförmige Kämme 5 und 6;
- Fig. 3b: einen ringförmigen Kamm 7;
- Fig. 3c: einen Kamm 13 im Eingriff mit einem Doppelzackenkamm 12;

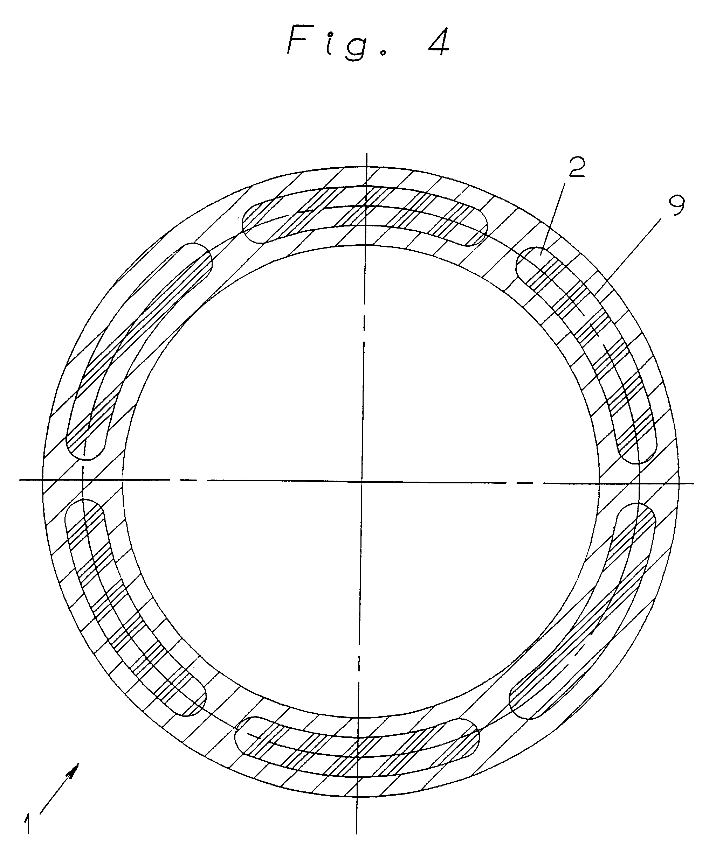

- Fig. 4: mehrere nierenförmige Kammern 9 und

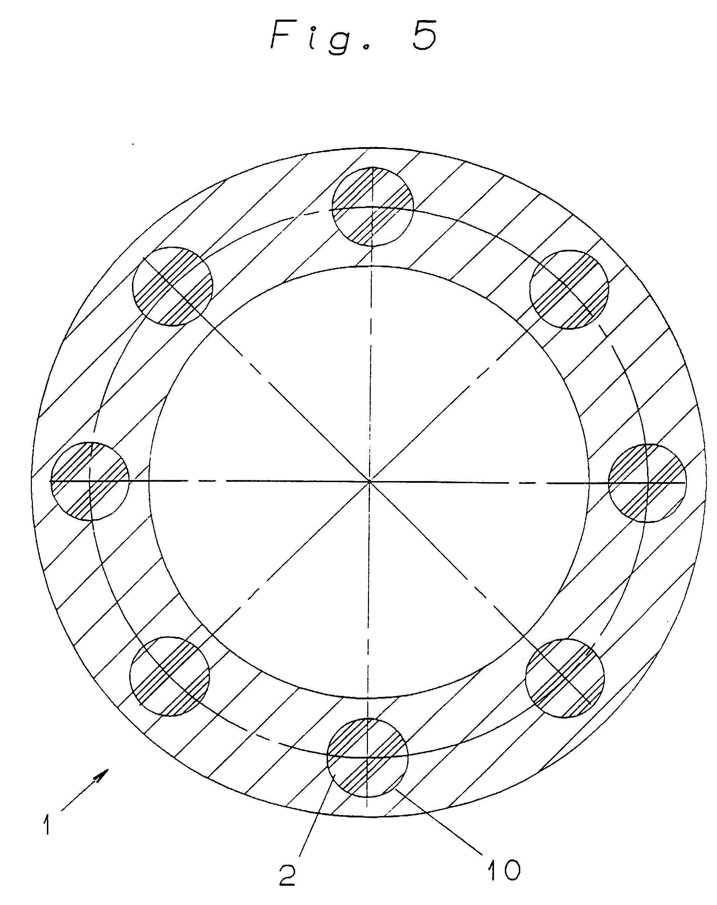

- Fig. 5: einen Querschnitt von nicht erfindungsgemäße zylinderförmigen Dehnungselementen 10.

Das gesamte Wärmedehnungsausgleichselement 1 ist aus mehreren Segmenten von Dehnungselementen 2, Hohlkörpern 3 und darin gleitenden Kolben 4 aufgebaut. Dabei wird das Dehnungselement 2 aus einem Material mit hohem Wärmeausdehnungskoeffizienten von einem Hohlkörper 3 umfaßt. Das Material des Dehnungselements 2 ist hinreichend plastisch und elastisch, z. B. Viton^{R}, so daß sich die Volumenausdehnung infolge der Führung durch die Umfassung in einer axialen Längenausdehnung äußert, die eine Verschiebung des Kolbens 4 bewirkt.

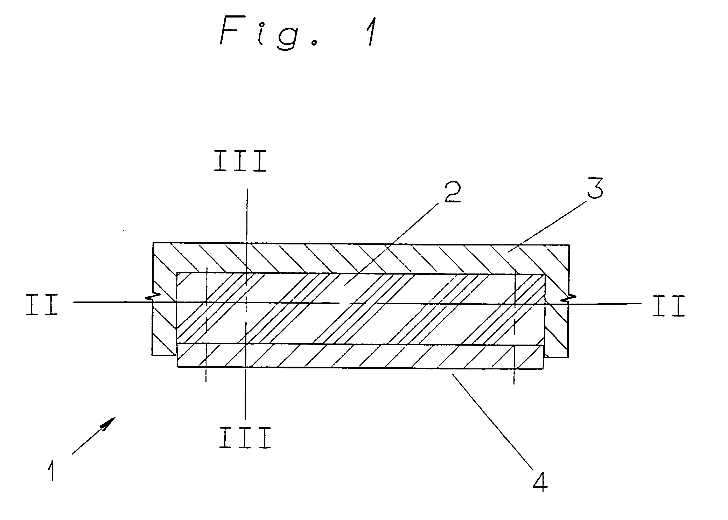

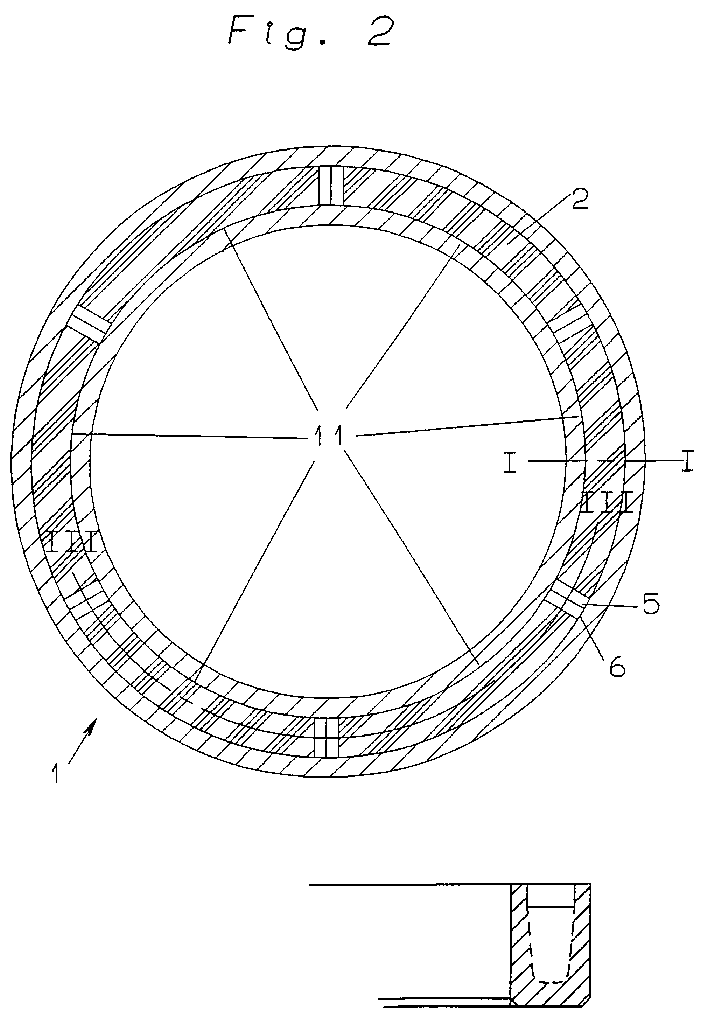

Fig. 1 zeigt einen Querschnitt durch ein solches Wärmedehnungsausgleichselement 1 mit Dehnungselement 2, Hohlkörper 3 und Kolben 4. Der Kolben 4 drückt wiederum auf ein hier nicht dargestelltes Widerlager von Maschinenteilen. Im Falle eines ring- oder zylinderförmigen Wärmedehnungesausgleichselements wird die Zeichenebene durch den Radius- und den Höhenvektor aufgespannt. Die Zeichenebenen von Fig. 2 und Fig. 3 schneiden diesen Querschnitt entlang II bzw. III.

Fig. 2 zeigt einen Querschnitt durch ein segmentiertes, ringförmiges Wärmedehnungesausgleichselement 1, wobei die Zeichenebene durch den Radius und den Umfang aufgespannt wird. Die Zeichenebenen von Fig. 1 und Fig. 3 schneiden diesen Querschnitt entlang I bzw. III. Das Dehnungselement 2 ist in mehrere Segmente 11 mittels gegeneinnader verschränkter Kämme 5 und 6 unterteilt.

Fig. 3a zeigt einen Querschnitt des Wärmedehnungsausgleichselements 1 nach Fig. 2, wobei die Zeichenebene durch den Umfang- und Höhenvektor aufgespannt wird. Die Zeichenebenen von Fig. 1 und Fig. 2 schneiden diesen Querschnitt entlang I bzw. II. Die Kämme 5 und 6 sind gegeneinander verschränkt und können auf ihren Zacken gegeneinander gleiten. Dabei wird der Kamm 5 durch die Umfassung des Dehnungselements 2, d. h. den Hohlkörper 3 gebildet und der Kamm 6 durch den Kolben 4.

Fig. 3b zeigt einen Querschnitt einer zu den Fig. 2 und 3a alternativen Ausgestaltung eines Wärmedehnungsausgleichselements 1, wobei die Unterteilung des Dehnungselements 2 durch die Zacken eines Kamms 7 erfolgt, die in Nuten eines Deckrings 8 eingreifen. Dabei wird der Kamm 7 durch die Umfassung des Dehnungselements 2, d. h. den Hohlkörper 3 gebildet und der Deckring 8 durch den Kolben 4. Die Zeichenebene wird hier durch den Umfang- und Höhenvektor aufgespannt wird. Die Zeichenebenen von Fig. 1 und Fig. 2 schneiden diesen Querschnitt entlang I bzw. II.

Fig. 3c zeigt einen Querschnitt einer Ausgestaltung eines Wärmedehnungsausleichselements 1, wobei die Unterteilung des Dehnungselements 2 durch die Zacken eines Kamms 13 erfolgt, die in die Doppelzacken eines Kamms 12 eingreifen. Dabei wird der Kamm 13 durch den Hohlkörper 3 gebildet und der Kamm 12 durch den Kolben. Die Zeichenebene wird hier durch den Umfangs- und Höhenvektor aufgespannt. Die Zeichenebenen von Fig. 1 und 2 schneiden diesen Querschnitt entlang I bzw. II.

Fig. 4 zeigt eine weitere Ausgestaltung der Erfindung, bei der nierenförmige Hohlräume 9 entlang eines Kreisumfangs in eine Platte gefräßt sind. Die Zeichenebene wird durch den Zylinderradius und den -umfang aufgespannt.

Fig. 5 zeigt eine nicht erfindungsgemäße Ausgestaltung, bei der zylinderförmige Hohlräume 10 zur Aufnahme der Dehnungselemente entlang eines Kreisumfangs angeordnet sind. Die Zeichenebene wird hier wieder durch den Zylinderradius und -umfang aufgespannt.

Alle hier dargestellten Ausgestaltungen von Hohlräumen zur Aufnahme von Dehnungselementen können einerseits direkt als Einstiche in eine Anschlußplatte realisiert werden oder in anderen Bauteilen untergebracht werden. Der Hohlkörper mit segmentierten Hohlräumen zur Aufnahme der Dehnungselemente kann auch durch einen Abstich in einer Anschlußplatte auf der einen Seite und einen ringförmigen Kamm mit radial verlaufenden Zacken auf der anderen Seite gebildet werden.

All diese Ausgestaltungen der Erfindung verhindern ein Fließen des Materials des Dehnungselements von stärker belasteten zu weniger stark belasteten Stellen.

### Bezugszeichen

- 1: Wärmedehnungsausgleichselement
- 2: Dehnungselement
- 3: Hohlkörper
- 4: Kolben
- 5: Kamm
- 6: Kamm
- 7: Kamm
- 8: Deckring
- 9: nierenförmiger Hohlraum
- 10: zylinderförmiger Hohlraum
- 11: Segmente
- 12: Doppelzackenkamm
- 13: Kamm

## Patentansprüche

1. Wärmedehnungsausgleichselement (1), das Abstandsänderungen zwischen Maschinenteilen mit unterschiedlichen Wärmeausdehnungskoeffizienten in Folge Temperaturänderung ausgleicht und aus einem Dehnungselement (2) aus einem Material mit hohem Wärmeausdehnungskoeffizienten, einem Hohlkörper (3) und einem Kolben (4) besteht, der in dem Hohlkörper (3) gleitet und die Wärmeausdehnung des Dehnungselements (2) in axialer Richtung vermittelt, dadurch **gekennzeichnet,** daß das Dehnungselement (2) in mehrere Segmente (11) unterteilt ist und der Hohlkörper (3) einen Kamm (5, 7, 13) bildet, dessen Zacken den Hohlkörper (3) in mehrere Kammern unterteilt, die die Segmente (11) des Dehnungselementes (2) aufnehmen.

2. Wärmedehnungsausgleichselement (1) nach Anspruch 1, dadurch **gekennzeichnet**, daß auch der Kolben (4) einen Kamm (6) bildet und die Zacken der beiden Kämme (5, 6) jeweils aneinanderliegen.

3. Wärmedehnungsausgleichselement (1) nach Anspruch 1, dadurch **gekennzeichnet,** daß die Zacken des Kammes (7) des Hohlkörpers (3) in Nuten des Kolbens (8) eingreifen.

4. Wärmedehnungsausgleichselement (1) nach Anspruch 1, dadurch **gekennzeichnet,** daß der Kolben auch einen Kamm (12) bildet und einer der Kämme als Doppelzackenkamm (12) ausgebildet ist, und die Zacken des einen Kamms (13) in die Doppelzacken (12) des anderen eingreifen.

## Claims

1. Thermal expansion compensating element (1), which compensates variations in the distance between machine parts of differing coefficients of thermal expansion as a result of a temperature change and comprises an expansion element (2) made of a material with a high coefficient of thermal expansion, a hollow body (3) and a piston (4), which slides in the hollow body (3) and conveys the thermal expansion of the expansion element (2) in axial direction, characterized in that the expansion element (2) is subdivided into a plurality of segments (11) and the hollow body (3) forms a comb (5, 7, 13), the teeth of which subdivide the hollow body (3) into a plurality of chambers which receive the segments (11) of the expansion element (2).

2. Thermal expansion compensating element (1) according to claim 1, characterized in that the piston (4) also forms a comb (6) and the teeth of the two combs (5, 6) lie in each case adjacent to one another.

3. Thermal expansion compensating element (1) according to claim 1, characterized in that the teeth of the comb (7) of the hollow body (3) engage into grooves of the piston (8).

4. Thermal expansion compensating element (1) according to claim 1, characterized in that the piston also forms a comb (12) and one of the combs takes the form of a double-toothed comb (12), and the teeth of the one comb (13) engage into the double teeth (12) of the other.

## Revendications

1. Elément de compensation de dilatation thermique (1) qui compense le changement d'écart entre les composants d'une machine avec différents coefficients de dilatation thermique en raison de variations de températures et qui comporte un élément de dilatation (2) d'un matériel à coefficient élevé de dilatation thermique, un corps creux (3) et un piston (4) qui glisse dans le corps creux et qui transmet axialement la dilatation thermique de l'élément de dilatation (2), **caractérisé** en ce que l'élément de dilatation (2) est divisé en plusieurs segments (11) et que le corps creux (3) forme une sorte de peigne (5, 7, 13), dont les dents subdivisent le corps creux (3) en plusieurs chambres où sont logés les segments (11) de l'élément de dilatation (2).

2. Elément de compensation de dilatation thermique (1) d'après la revendication 1, **caractérisé** en ce que le piston (4) forme aussi un peigne (6) et que les dents des deux peignes (5, 6) sont adjacentes.

3. Elément de compensation de dilatation thermique (1) d'après la revendication 1, **caractérisé** en ce que les dents du peigne (7) du corps creux (3) s'engrènent dans les rainures du piston (8).

4. Elément de compensation de dilatation thermique (1) d'après la revendication 1, **caractérisé** en ce que le piston forme aussi un peigne (12), que l'un des peignes est réalisé comme un peigne à double denture (12) et que les dents de l'un des peignes (13) s'engrènent dans la double denture (12) de l'autre.
